# EUROPEAN PATENT SPECIFICATION

(11) **EP 1 986 350 B1**
(45) Date of publication and mention of the grant of the patent: **23.02.2011**
(21) Application number: 07290529.2
(22) Date of filing: 26.04.2007
(51) Int. Cl.: H04B 10/08

(54) **Monitoring unit, optical network, and operating method for the optical network**
Überwachungseinheit, optisches Netzwerk und Betriebsverfahren für das optische Netzwerk
Unité de surveillance, réseau optique et procédé d'exploitation pour le réseau optique

(43) Date of publication of application: 29.10.2008
(73) Proprietor: Alcatel Lucent, 75008 Paris (FR)
(72) Inventor: Hehmann, Jörg, 71263 Weil der Stadt (DE); Straub, Michael, 75433 Maulbronn (DE); Schmuck, Harald, 71701 Schwieberdingen (DE); Pfeiffer, Thomas, 70569 Stuttgart (DE)
(74) Representative: Schmidt, Werner Karl

(56) References cited:
- EP-A- 1 578 038
- EP-A1- 1 037 417
- TANAKA K, TATEDA M, INOUE Y: "Measuring the Individual Attenuation Distribution of Passive Branched Optical Networks" IEEE PHOTONICS TECHNOLOGY LETTERS, vol. 8, no. 7, 1 July 1996 (1996-07-01), pages 915-917, XP009088815 USA

## Description

The invention relates to a monitoring unit for an optical network, the optical network having at least one branch which forms an optical path from a main line of the optical network to an optical network termination, the monitoring unit being connectable to the branch and comprising a switchable reflective element for reflecting at least part of a signal transmitted downstream from the main line, to an optical network comprising at least one such monitoring unit, and to an operating method for such an optical network.

In order to improve the quality of service in optical networks, in particular Passive Optical Networks (PONs) with a tree-like structure, continuous monitoring techniques detecting and localizing faults are of special interest, as they are expected to provide substantial cost savings to telecommunications companies operating these networks.

EP 1 578 038 A1 discloses a device for monitoring an optical network which comprises an optical monitoring termination (OMT) at a head end of a main line of the network and at least one optical monitoring unit (OMU) as described above connected to a branch of the network. The OMT and the OMU are arranged for communicating with each other using a dedicated monitoring wavelength which is extracted from the optical path by the OMU via a wavelength-selective device, in particular a WDM (Wavelength-Division-Multiplex) coupler. The reflective optical element is switchable, i.e. in its "on" state reflects light at the extracted monitoring wavelength back to the optical path via the WDM coupler, whereas in its "off" state the reflective optical element is idle. Using a dedicated monitoring wavelength, the OMU is transparent towards the optical network.

German Patent application DE 10 2006 045 802 A1 discloses a monitoring unit for integration into an optical data line having a coupler which branches part of a downstream-transmitted optical signal to a photodiode for o/e-conversion. The electrical energy of the ole-converted optical signal is then stored in a storage unit of the monitoring unit, e.g. a capacitor, thus avoiding the need for an external power source. For upstream communication along the branch, either a laser diode is provided in the monitoring unit, or the photodiode is driven as a transmitter.

The article "Measuring the Individual Attenuation Distribution of Passive Branched Optical Networks" by Kuniaki Tanaka et al., IEEE Photonics Technology Letters, Vol. 8, No. 7, July 1996, discloses an optical network having a reflective optical filter in each of the branches of the network for reflecting test light at a given wavelength. For generating the test light, an Optical Time Domain Reflectometer (OTDR) is disposed at a head end of the main line of the network together with a tunable laser. The test light is distributed in an optical splitter/router module to the individual branches according to their wavelengths and reflected at the optical filters back to the central office. Using such a method for detection of faults in the branched fibers of a PON, possibly having identical fiber lengths, a high spatial resolution of the equpment at a central office of the network is required.

EP 1 037 417 B1 describes a method to perform central control of an in-line element in a tree-like network, e.g. an optical amplifier or an optical switch, using an optical line terminator (OLT) which adds extra bits in predefined grants sent downstream to the in-line element. These extra bits comprise an identification of the in-line element and a locally predefined function for execution by the selected in-line element.

In the above-mentioned approaches, although monitoring of fiber losses or breaks in the optical network is possible, expensive components such as additional light sources in the monitoring unit or tunable lasers in the OLT are required and as some of the solutions use a tap coupler, high insertion loss is generated.

### Object of the invention

It is the object of the invention to provide a monitoring unit, an optical network and an operating method as described above which allow operation, in particular monitoring of the network, at low cost and with an additional benefit for the network operator.

### Short description of the invention

This object is achieved by a monitoring unit in which the switchable reflective element is an in-line element for insertion into the branch for at least in part blocking or unblocking the optical path.

By inserting the monitoring unit with the switchable reflective element (SRE) as an in-line element in the network, the SRE is not only capable of reflecting at least part of the signals transmitted downstream from the main line for monitoring purposes, but also to selectively block signals which are transmitted upstream by an ONT at the subscriber end of the network. The switchable reflective element thus is capable of controlling the optical path, i.e. all the traffic to and from the specific optical network unit located in the corresponding branch.

This functionality is particularly useful if the subscriber at the location of the optical network termination shows an inadequate behaviour, i.e. does not pay subscription fees or feeds disturbing signals into the network. Thus, by using the switchable reflective element as a blocking element, the access of the end user to the network can be restricted occasionally or permanently on request from the OLT. Furthermore, for monitoring purposes, the OLT can send control signals to the monitoring unit which cause the SRE to be switched into the optical path for back reflecting these control signals or other defined signals following the OLT control signals. In contrast to the solution described e.g. in EP 1 578 038 A1, as the reflective optical element is disposed in the optical path, almost all of the optical power of the control signal can be reflected back to the OLT.

As a switchable reflective element, an optical switch which is realized in Micro-Electro-Mechanical-System (MEMS) technology may be used. The switchable reflective element may be a commercially available optical switch (1 : 2 ports with reflective fiber end) which is preferably based on MEMS technology or comparable techniques (liquid crystal, usage of Faraday effect ...) or even a shutter. With such a reflective element, in particular using MEMS technology, an insertion loss within the collimated beam of 0.5 dB or lower can be achieved.

In a preferred embodiment, the switchable reflective element is a wavelength-selective element for reflecting part of the signal in a specific wavelength range. In this embodiment, only part of the entire wavelength range of the optical signals between the OLT and the ONT is blocked, thus allowing specific services using a particular wavelength range to pass from the OLT to the ONT and vice versa. The switchable reflective element may also be construed to reflect (and thus block) light transmitted downstream from the OLT at a first wavelength and to block light transmitted upstream from the ONT at a second wavelength which is different from the first wavelength.

Preferably, the monitoring unit further comprises a tap coupler for branching part of the signal from the optical path to an o/e-conversion element, preferably a photodiode. The o/e-conversion element converts control signals sent by the OLT to electrical signals which can be used to control the switchable reflective element.

In a highly preferred embodiment, a control unit for controlling the switchable reflective element is provided, the control unit being in operative connection with the o/e-conversion element. The control unit processes the o/e-converted control signal and controls the switchable reflecting element depending on the information contained therein.

In a further highly preferred embodiment, the control unit is in operative connection with a storage unit, in particular a capacitor, for storing the electrical energy produced by the o/e-conversion element. Thereby, the converted optical energy can be re-used for performing remote powering by loading the capacitor with the downstream data signal when the monitoring unit is idle.

The invention is also realized in an optical network having a main line and at least one branch forming an optical path from the main line to an optical network termination, whereby in the at least one branch at least one monitoring unit as described above is arranged as an in-line element. The supervision of the monitoring unit in the optical network can be based on an optical loop-back procedure initiated by the OLT: A well-defined signal, addressing one specific monitoring unit, will be transmitted through the network. The corresponding monitoring unit will receive that signal and will subsequently send an optical response back to the OLT where the data will be analyzed. The optical network as described above may or may not include the ONTs. In the latter case, the optical network can be an operator network, the branches of which terminate in a demarcation point to a user network (see below).

In an advantageous embodiment the network comprises at least two branches, each with a monitoring unit, and the switchable reflective elements of the monitoring units are construed for reflecting the downstream-transmitted signal in a different way. Whereas in the above-described case sending individual addresses to all corresponding monitoring units and successive testing of all branches is necessary, in the present case specific reflectors (e.g. based on dielectrical mirrors) are implemented in the monitoring unit. Here, the addressing of the individual monitoring units is not longer needed and the switching of the reflective elements can be initiated by one control signal from the OLT, which is then capable of distinguishing between signals reflected from the different branches.

In a highly preferred embodiment, the optical network is an operator network and the monitoring unit is arranged in the operator network adjacent to a demarcation point to a user network. In this case, the monitoring unit is located at a so-called demarcation point constituting the limit between the part of the branch which is operated by a telecommunication company (operator network), and the part of the branch which is operated by an end user or subscriber (user network). Such a monitoring unit, also referred to as a demarcation point monitor (DPM), represents a network element located near the ONTs which can provide information about the status of the operator network up to the user network without active support from the user at the ONT side.

The invention is also realized in a method for operating an optical network having a main line and at least one branch forming an optical path between the main line and an optical network unit, the method comprising the steps of: transmitting a control signal downstream the main line to a monitoring unit as described above and arranged as an in-line element in the at least one branch, detecting at least part of the control signal in the monitoring unit, and in dependence of the detected control signal, controlling the switchable reflective element for blocking or unblocking the optical path. Using the inventive method, not only monitoring of the status of the network is possible by detecting and analyzing the signals reflected by the switchable optical element, but the switchable reflective element can also be used to block the optical path depending on specific information contained in the control signal. The blocking of the optical path can be performed time-selective, i.e. at selected time intervals which are specified in the control signal, or wavelength-selective, by using a wavelength-selective switchable optical element as described above.

In a highly preferred variant, for generating a binary data signal, the optical path is blocked or unblocked in a predetermined time sequence. In this way, the switchable reflective element generates a modulation of the reflected control signal which can be used to transmit data about the condition of the monitoring unit, e.g. its temperature, upstream to the OLT. Thus, a cost-effective way for generating a bidirectional data transfer between the OLT and the monitoring unit is achieved, as no additional active elements such as laser sources are needed for the upstream communication.

Further characteristics and advantages of the invention are provided in the following description of exemplary embodiments of the invention, with reference to the figures of the drawing, which shows details that are significant in the context of the invention, and in the claims. The individual characteristics can be implemented individually by themselves, or several of them can be implemented in any desired combination in a variant of the invention.

### Drawing

The invention is shown in the drawing.
- **Fig. 1**: shows a schematic diagram of an embodiment of an optical network according to the invention, and
- **Fig. 2**: shows a first embodiment of a monitoring device according to the invention with a battery as a power source (Fig. 2a) and a second embodiment of the monitoring device with a capacitor as an energy storage device (Fig. 2b).

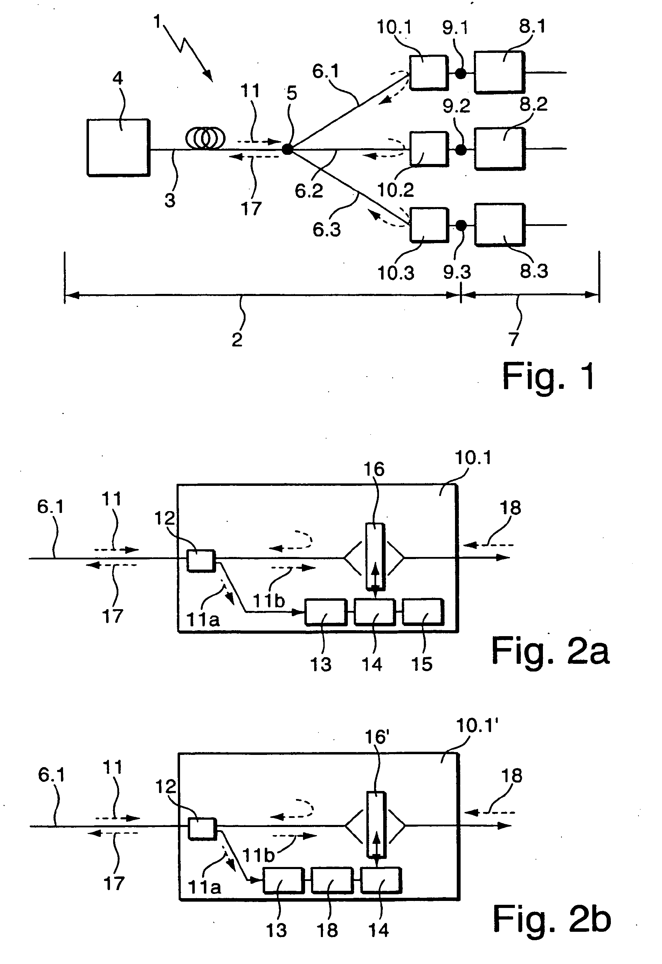

Fig. 1 shows a passive optical network **1** which comprises a tree-like operator network **2** as a first section. The operator network 2 has a main fiber line **3** being located between an Optical Line Termination **4** and a 1 x N passive optical distribution network (switch) **5** connecting the main line 3 with a number N of branches, three of which **(6.1** to **6.3)** are shown in Fig. 1. The branches 6.1 to 6.3 of the operator network 2 are continued in a user network **7** which constitutes a second section of the optical network 1 and which comprises the Optical Network Terminations (ONTs) **8.1** to **8.3,** one for each of the branches 6.1 to 6.3. A so-called demarcation point **9.1** to **9.3** marks the limit between the operator network 2 and the user network 7 in each of the branches 5.1 to 5.3. In the operator network 2, a monitoring unit **10.1** to **10.3** is arranged adjacent to each of the demarcation points 9.1 to 9.3, which, due to its position in the optical network 1 is also referred to as a demarcation point monitor (DPM).

As the operator is responsible for faults occurring in the operator network 2, e.g. due to fiber breaks, the operator has to monitor the network 1 continuously to spot possible defects. Due to the large distances which are covered by the fiber links in the network 1, the operator generally has only access to the network 1 via the OLT 4, also referred to as central office, and has to check the correct operability of the network 1 from this site all the way down to the demarcation points 9.1 to 9.3.

For monitoring the network, the OLT 4 generates a control signal **11** which is transmitted downstream the branches 6.1 to 6.3 of the operator network 2 to the monitoring units 10.1 to 10.3. The control signal 11 addresses one specific monitoring unit 10.1, which is shown in detail in **Fig. 2a****.** The monitoring unit 10.1 has a tap coupler **12** which branches part (about 5 % of the total intensity) of the control signal **11a** from the branch 6.1 to a photodiode **13** which is used as an o/e-converting element. A control unit **14** which is powered by a battery **15** detects the electrical signal and processes it for extracting the control information contained therein. The control unit 14 is operatively connected to a switchable reflective element **16** realized in MEMS technology. Upon reception of the control signal, the switchable reflective element 16 is switched from an idle state in which it does not influence the remnant of the control signal **11 b** (having 95 % of the total intensity) to an "on" state in which the remnant of the control signal 11 b is reflected by the switchable reflective element 16, thus performing a loop-back represented by the curved arrow in Fig. 2a. A reflected control signal **17** is then transmitted in upstream to the Optical Line Termination 4 of Fig. 1 where the reflected signal is analyzed for detecting faults in the corresponding branch 6.1. By successively sending control signals to all of the monitoring units 10.1 to 10.3, the whole operator network 2 can thus be monitored from the OLT 4. Also, an improvement of the performance of (embedded) OTDR measurements from the OLT 4 is provided as the sensitivity of such measurements is improved due to the reflection of about 95 % of the intensity of the control signal 11 at the switchable reflective element 16.

When the SRE 16 is in its "on" state, the downstream signal 11 is blocked from reaching the OLT 8.1. Likewise, an upstream signal **18** from the OLT 8.1 (see Fig. 1) is blocked from entering the operator network 2. Consequently, by using the reflective optical element 16 in the "on" state in the branch 6.1, the optical path between the OLT 4 and the ONT 6.1 is blocked in both directions. Such a blocking of the data path between the OLT 4 and the ONT 8.1 can be advantageously used when data traffic to and from a specific subscriber located at the ONT 8.1 is not desired, which is in particular the case when the subscriber at the ONT 8.1 does not pay the connection fee to the company operating the operator network 2 or when the ONT 8.1 feeds disturbing optical signals into the network.

Although in the optical network 1 shown in Fig. 1, all of the monitoring units 6.1 to 6.3 are of identical design, it is possible to use specific monitoring units 10.1 to 10.3 for each branch 6.1 to 6.3 by using switchable reflective elements, e.g. based on dielectrical mirrors, which either are of a different construction for each of the branches 6.1 to 6.3 or are of identical construction, but tunable, i.e. their reflective properties can be individually set during installation, e.g. using a tunable, wavelength-selective filter. In this case, subsequently addressing all of the monitoring units 10.1 to 10.3 by individual control signals is no longer needed, as one control signal from the OLT 4 is sufficient to switch all the reflective optical elements in the different branches 6.1 to 6.3. As each of the branches 6.1 to 6.3 sends a differently reflected control signal back to the OLT 4, faults in the network 1 can be detected in the OLT 4 in one step, i.e. without sequentially checking each of the branches 6.1 to 6.3.

**Fig. 2b** shows a monitoring unit **10.1'** which differs from the monitoring unit 10.1 of Fig. 2a in that it is remotely powered by using the optical power of the part of the signal 11a which is directed to the photodiode 13. The photodiode 13 converts the optical signal to an electrical signal which is stored in a capacitor **18.** The stored power is provided to the control unit 14, thus avoiding the additional cost for a battery in the monitoring unit 10.1'.

Furthermore, the monitoring unit 10.1' of Fig. 2b differs from the monitoring unit of Fig. 2a in that there is provided a reflective optical element **16'** which is wavelength-selective, i.e. instead of blocking the entire wavelength band of the data or control signals on the branch 6.1, only specific wavelengths are reflected and blocked, respectively. In such a way, it is possible to block only specific services which are allocated at defined wavelength ranges in the signals from the OLT 4 to the ONT 6.1 and in the opposite direction.

In both of the monitoring units 6.1 and 6.2 of Fig. 2 it is possible to use the reflective optical element 16, 16' as an on/off switch for generation of binary signals with a clock rate which is limited by the design of the switch, being typically in the order of magnitude of ms or µs. Using the reflective optical element 16, 16' in this way, modulation of the reflected control signals 17 from the OLT 4 is possible, such that the reflected control signals 17 are modulated with a binary sequence, thus allowing to transfer data about the status, e.g. the temperature, of the monitoring unit 10.1, 10.1' upstream to the OLT 4 in a cost-effective way.

In summary, with the monitoring units 10.1, 10.1' and the network 1 described above blocking of ONT up-link signals back to the operator network and of down-link signals from the OLT to the user network is possible. Moreover, a higher back reflected power (> 10 dB) is available at the OLT and the use of additional laser sources can be avoided. Also, the sensitivity for embedded OTDR measurements is increased. Of course, the monitoring units described herein can be easily modified in case that two or more parallel optical paths lead from the OLT to the ONT. Also, use of the monitoring units described herein is not limited to optical networks with a tree-like structure such as PONs, but they may equally well be applied in other network types, e.g. networks having a meshed or point-to-point structure.

## Claims

1. Monitoring unit (10.1', 10.1 to 10.3) for an optical network (1, 2) having at least one branch (6.1 to 6.3) which forms an optical path from a main line (3) of the optical network (1, 2) to an optical network termination (8.1 to 8.3),
the monitoring unit (10.1', 10.1 to 10.3) being connectable to the branch (6.1 to 6.3) and comprising a switchable reflective element (16, 16') for reflecting at least part of a signal (11, 11b) transmitted downstream from the main line (3),
**characterized in that**
the switchable reflective element (16,16') is an in-line element for insertion into the branch (6.1 to 6.3) for at least in part blocking or unblocking the optical path.

2. Monitoring unit according to claim 1, wherein the switchable reflective element (16, 16') is a wavelength-selective element for reflecting part of the signal (11) in a specific wavelength range.

3. Monitoring unit according to claim 1, further comprising a tap coupler (12) for branching part of the signal (11 a) from the optical path to an o/e-conversion element, preferably a photodiode (13).

4. Monitoring unit according to claim 3, further comprising a control unit (14) for controlling the switchable reflective element (16, 16'), the control unit (14) being in operative connection with the o/e-conversion element.

5. Monitoring unit according to claim 4, wherein the control unit (14) is in operative connection with a storage unit, in particular a capacitor (18), for storing the electrical energy produced by the o/e-conversion element.

6. Optical network (1, 2) having a main line (3) and at least one branch (6.1 to 6.3) forming an optical path from the main line (3) to an optical network termination (8.1 to 8.3),
**characterized by**
at least one monitoring unit (10.1',10.1 to 10.3) according to claim 1, arranged as an in-line element in the at least one branch (6.1 to 6.3).

7. Optical network according to claim 6, wherein the network comprises at least two branches (6.1 to 6.3), each with a monitoring unit (10.1 to 10.3), and wherein the switchable reflective elements (16, 16') of the monitoring units (10.1', 10.1 to 10.3) are construed for reflecting the downstream-transmitted signal (11, 11 b) in a different way.

8. Optical network according to claim 6, wherein the optical network is an operator network (2) and the monitoring unit (10.1', 10.1 to 10.3) is arranged in the operator network (2) adjacent to a demarcation point (9.1 to 9.3) to a user network (7).

9. Method for operating an optical network having a main line (3) and at least one branch (6.1 to 6.3) forming an optical path between the main line (3) and an optical network termination (8.1 to 8.3), the method comprising the steps of:
transmitting a control signal (11) downstream from the main line (3) to a monitoring unit (10.1', 10.1 to 10.3) according to claim 1 and arranged as an in-line element in the at least one branch (6.1 to 6.3),
detecting at least part of the control signal (11a) in the monitoring unit (10.1', 10.1 to 10.3), and
in dependence of the detected control signal (11a), controlling the switchable reflective element (16, 16') for blocking or unblocking the optical path.

10. Method according to claim 9, wherein for generating a binary data signal, the optical path is blocked or unblocked in a predetermined time sequence.

## Patentansprüche

1. Überwachungseinheit (10.1', 10.1 bis 10.3) für ein optisches Netzwerk (1, 2) mit mindestens einer Abzweigung (6.1 bis 6.3), welche einen optischen Pfad von einer Hauptleitung (3) des optischen Netzwerks (1, 2) zu einem optischen Netzwerkabschluss (8.1 bis 8.3) bildet,
wobei die Überwachungseinheit (10.1', 10.1 bis 10.3) an die Abzweigung (6.1 bis 6.3) anschließbar ist und ein schaltbares reflektierendes Element (16, 16') zum Reflektieren mindestens eines Teils eines von der Hauptleitung (3) abwärts übertragenen Signals (11, 11b) umfasst,
**dadurch gekennzeichnet, dass**
das schaltbare reflektierende Element (16,16') ein Inline-Element für das Anordnen in der Abzweigung (6.1 bis 6.3) ist, um zumindest teilweise den optischen Pfad zu sperren oder freizugeben.

2. Überwachungseinheit nach Anspruch 1, wobei das schaltbare reflektierende Element (16, 16') ein wellenlängenselektives Element zum Reflektieren eines Teils des Signals (11) in einem spezifischen Wellenlängenbereich ist.

3. Überwachungseinheit nach Anspruch 1, weiterhin umfassend einen Verzweigungskoppler (12) zum Abzweigen eines Teils des Signals (11 a) vom optischen Pfad an ein O/E-Wandlungselement, vorzugsweise eine Fotodiode (13).

4. Überwachungseinheit nach Anspruch 3, weiterhin umfassend eine Steuereinheit (14) zum Steuern des schaltbaren reflektierenden Elements (16, 16'), wobei die Steuereinheit (14) mit dem O/E-Wandlungselement in Wirkverbindung steht.

5. Überwachungseinheit nach Anspruch 4, wobei die Steuereinheit (14) mit einer Speichereinheit, insbesondere einem Kondensator (18) in Wirkverbindung steht, um die von dem O/E-Wandlungselement erzeugte elektrische Energie zu speichern.

6. Optisches Netzwerk (1, 2) mit einer Hauptleitung (3) und mindestens einer Abzweigung (6.1 bis 6.3), welche einen optischen Pfad von der Hauptleitung (3) zu einem optischen Netzwerkabschluss (8.1 bis 8.3) bildet,
**gekennzeichnet durch**
mindestens eine Überwachungseinheit (10.1',10.1 bis 10.3) nach Anspruch 1, welche als ein Inline-Element in der mindestens einen Abzweigung (6.1 bis 6.3) angeordnet ist.

7. Optisches Netzwerk nach Anspruch 6, wobei das Netzwerk mindestens zwei Abzweigungen (6.1 bis 6.3) umfasst, welche jeweils mit einer Überwachungseinheit (10.1 bis 10.3) ausgestattet sind, und wobei die schaltbaren reflektierenden Elemente (16, 16') der Überwachungseinheiten (10.1', 10.1 bis 10.3) dazu ausgelegt sind, das abwärts übertragene Signal (11, 11b) in eine andere Richtung zu reflektieren.

8. Optisches Netzwerk nach Anspruch 6, wobei das optische Netzwerk ein Betreibernetzwerk (2) ist und die Überwachungseinheit (10.1', 10.1 bis 10.3) in dem Betreibernetzwerk (2) neben einem Übergabepunkt (9.1 bis 9.3) an ein Benutzernetzwerk (7) angeordnet ist.

9. Verfahren zum Betreiben eines optischen Netzwerks mit einer Hauptleitung (3) und mindestens einer Abzweigung (6.1 bis 6.3), welche einen optischen Pfad zwischen der Hauptleitung (3) und einem optischen Netzwerkabschluss (8.1 bis 8.3) bildet, wobei das Verfahren die folgenden Schritte umfasst:
Übertragen eines Steuersignals (11) von der Hauptleitung (3) abwärts an eine Überwachungseinheit (10.1', 10.1 bis 10.3) gemäß Anspruch 1, welche als ein Inline-Element in der mindestens einen Abzweigung (6.1 bis 6.3) angeordnet ist,
Erkennen mindestens eines Teils des Steuersignals (11a) in der Überwachungseinheit (10.1', 10.1 bis 10.3), und
in Abhängigkeit von dem erkannten Steuersignal (11a), Steuern des schaltbaren reflektierenden Elements (16, 16') zum Sperren oder Freigeben des optischen Pfads.

10. Verfahren nach Anspruch 9, wobei zum Erzeugen eines binären Datensignals der optische Pfad in einer vorgegebenen Zeitsequenz gesperrt oder freigegeben wird.

## Revendications

1. Unité de surveillance (10.1', 10.1 à 10.3) pour un réseau optique (1, 2) comprenant au moins une branche (6.1 à 6.3) qui forme un trajet optique d'une ligne principale (3) du réseau optique (1, 2) vers une terminaison de réseau optique (8.1 à 8.3), l'unité de surveillance (10.1', 10.1 à 10.3) pouvant être connectée à la branche (6.1 à 6.3) et comprenant un élément réfléchissant commutable (16, 16') pour refléter au moins une partie d'un signal (11, 11b) émis vers l'aval depuis la ligne principale (3),
**caractérisée en ce que**
l'élément réfléchissant commutable (16,16') est un élément en ligne destiné à être inséré dans la branche (6.1 à 6.3) pour bloquer ou débloquer au moins partiellement le trajet optique.

2. Unité de surveillance selon la revendication 1, dans laquelle l'élément réfléchissant commutable (16, 16') est un élément à sélection de longueur d'onde pour réfléchir une partie du signal (11) dans une plage de longueurs d'onde spécifique.

3. Unité de surveillance selon la revendication 1, comprenant en outre un coupleur de dérivation (12) pour dériver une partie du signal (11a) du trajet optique vers un élément de conversion o/e, de préférence une photodiode (13).

4. Unité de surveillance selon la revendication 3, comprenant en outre une unité de commande (14) pour commander l'élément réfléchissant commutable (16, 16'), l'unité de commande (14) se trouvant en connexion opérationnelle avec l'élément de conversion o/e.

5. Unité de surveillance selon la revendication 4, dans laquelle l'unité de commande (14) se trouve en connexion opérationnelle avec une unité de stockage, notamment un condensateur (18), pour stocker l'énergie électrique produite par l'élément de conversion o/e.

6. Réseau optique passif (1, 2) comprenant une ligne principale (3) et au moins une branche (6.1 à 6.3) formant un trajet optique depuis la ligne principale (3) vers une terminaison de réseau optique (8.1 à 8.3),
**caractérisé par**
au moins une unité de surveillance (10.11, 10.1 à 10.3) selon la revendication 1, disposée en tant qu'élément en ligne dans l'au moins une branche (6.1 à 6.3).

7. Réseau optique selon la revendication 6, dans lequel le réseau comprend au moins deux branches (6.1 à 6.3), chacune avec une unité de surveillance (10.1 à 10.3), et dans lequel les éléments réfléchissants commutables (16, 16') des unités de surveillance (10.1', 10.1 à 10.3) sont construits pour réfléchir le signal émis vers l'aval (11, 11b) d'une manière différente.

8. Réseau optique selon la revendication 6, dans lequel le réseau optique est un réseau d'opérateur (2) et l'unité de surveillance (10.1', 10.1 à 10.3) est disposée dans le réseau d'opérateur (2) à côté d'un point de démarcation (9.1 à 9.3) vers un réseau d'utilisateur (7).

9. Procédé d'utilisation d'un réseau optique comprenant une ligne principale (3) et au moins une branche (6.1 à 6.3) formant un trajet optique entre la ligne principale (3) et une terminaison de réseau optique (8.1 à 8.3), le procédé comprenant les étapes suivantes :
émission d'un signal de commande (1) vers l'aval de la ligne principale (3) vers une unité de surveillance (10.1', 10.1 à 10.3) selon la revendication 1 et disposée en tant qu'élément en ligne dans l'au moins une branche (6.1 à 6.3),
détection d'au moins une partie du signal de commande (11a) dans l'unité de surveillance (10.1', 10.1 à 10.3) et
suivant le signal de commande détecté (11a), commande de l'élément réfléchissant commutable (16, 16') pour bloquer ou débloquer le trajet optique.

10. Procédé selon la revendication 9, dans lequel pour générer un signal de données binaire, le trajet optique est bloqué ou débloqué dans une séquence temporelle prédéterminée.
